# EUROPEAN PATENT APPLICATION

(11) **EP 1 361 637 A2**
(43) Date of publication of application: **12.11.2003**
(21) Application number: 03077258.6
(22) Date of filing: 12.09.1996
(51) Int. Cl.: H02H 3/02, H02H 9/02

(54) **Overcurrent protection circuit**

(30) Priority: 14.09.1995 US 3732 P; 29.11.1995 US 564831
(62) Divisional of application: 96933016.6
(71) Applicant: Tyco Electronics Corporation, Middletown, PA 17057-3163 (US)
(72) Inventor: Duffy, Hugh, Cupertino, CA 95014 (US); Wynn, Craig, Palo Alto, CA 94306 (US); Nickols, St. Elmos III, Los Gatos, CA 95030 (US); Thomas, Brian, San Francisco, CA 94122 (US)
(74) Representative: Jay, Anthony William

(57) **Abstract**

An overcurrent protection system which will give a rapid response to relatively small overcurrents. In a first aspect, the system, as illustrated in Figs. 1a and 2a, can be connected between an electrical power supply 102,12 and an electrical load 112,26 to form an operating circuit. When so connected, the system protects the circuit from overcurrents, has a normal operating condition and a fault condition, and comprises: a circuit interruption element 108,24 having a normal state which permits the flow of a normal current, I_{NORMAL}, when the system is in the normal operating condition, and a fault state which permits the flow of at most a reduced current, substantially less than I_{NORMAL}, when the system is in the fault condition; and a control element 104, connected in series with the circuit interruption element, the control element having a variable resistance which is low when the current in the system does not exceed the normal current, I_{NORMAL}, by a predetermined current amount, and increases by at least a predetermined resistance amount when the current in the system exceeds the normal current, I_{NORMAL}, by the predetermined current amount; the circuit interruption element changing from its normal state to its fault state, thereby causing the system to change from its normal operating condition to its fault condition, when the resistance of the control element has increased by the predetermined resistance amount. In a second aspect, the system, as illustrated in Figs. 1c and 4, can be connected between an electrical power supply 102,12 and an electrical load 112,26 to form an operating circuit. When so connected, the system protects the circuit from overcurrents. The system has a normal operating condition and a fault condition, and comprises: a circuit interruption element 108 having, a normal state which permits the flow of a normal current, I_{NORMAL}, when the system is in the normal operating condition, and a fault state which permits the flow of at most a reduced current, substantially less than I_{NORMAL}, when the system is in the fault condition; a control element 104, connected in series with the circuit interruption element, and having a control element deenergized state when the current in the system does not exceed the normal current, I_{NORMAL}, by a predetermined current amount, and a control element energized state when the current in the circuit has exceeded the normal current, I_{NORMAL}, by the predetermined current amount; a bypass element 106, connected in parallel with the series combination of the control element, the circuit interruption element, and the load, and having a bypass deenergized state which permits the flow of at most a reduced bypass current through the bypass element, and a bypass energized state which permits the flow of a substantially increased bypass current through the bypass element; and with the circuit interruption element changing from its normal state to its fault state when the bypass element changes from its bypass deenergized state to its bypass energized state, and the bypass element changing from its bypass deenergized state to its bypass energized state when the control element changes from its control element deenergized state to its control element energized state, thereby causing the circuit to change from its normal operating condition to its fault condition.

## Description

This invention relates to electrical circuit overcurrent protection. PTC circuit protection devices are well known. The device is placed in series with a load, and under normal operating conditions is in a low temperature, low resistance state. However, if the current through the PTC device increases excessively, and/or the ambient temperature around the PTC device increases excessively, and/or the normal operating current is maintained for more than the normal operating time, then the PTC device will be "tripped," i.e. converted to a high temperature, high resistance state such that the current is reduced substantially. Generally, the PTC device will remain in the tripped state, even if the current and/or temperature return to their normal levels, until the PTC device has been disconnected from the power source and allowed to cool. Particularly useful PTC devices contain a PTC element which is composed of a PTC conductive polymer, i.e. a composition which comprises (1) an organic polymer, and (2) dispersed, or otherwise distributed, in the polymer, a particulate conductive filler, preferably carbon black. PTC conductive polymers and devices containing them are described, for example in U.S. Patent Nos. 4,237,441, 4,238,812, 4,315,237, 4,317,027, 4,426,633, 4,545,926, 4,689,475, 4,724,417, 4,774,024, 4,780,598, 4,800,253, 4,845,838, 4,857,880, 4,859,836, 4,907,340, 4,924,074, 4,935,156, 4,967,176, 5,049,850, 5,089,801 and 5,378,407.

A limitation on the known uses of PTC protection devices is that if the overcurrent is relatively small, e.g. up to a few times the normal circuit current, it can take a relatively long time to convert the PTC device into its tripped state.

We have discovered a new overcurrent protection system which will give a rapid response to relatively small overcurrents. In the new system, a control element and interrupt element are placed in series with the load. The control element is functionally linked to the interrupt element, so that, when the current in the circuit exceeds a predetermined amount, the control element senses the overcurrent and causes the interrupt element to change from a relatively conductive state to a relatively non-conductive state (including a completely open state).

In a preferred aspect, this invention provides an electrical system which can be connected between an electrical power supply and an electrical load to form an operating circuit, and which when so connected protects the circuit from overcurrents, the system having a normal operating condition and a fault condition, and comprising
a. a circuit interruption element having,
   (1) a normal state which permits the flow of a normal current, I_{NORMAL}, when the system is in the normal operating condition, and
   (2) a fault state which permits the flow of at most a reduced current, substantially less than I_{NORMAL}, when the system is in the fault condition; and
b. a control element, connected in series with the circuit interruption element, the control element having a variable resistance which
   (1) is low when the current in the system does not exceed the normal current, I_{NORMAL}, by a predetermined current amount, and
   (2) increases by at least a predetermined resistance amount when the current in the system exceeds the normal current, I_{NORMAL}, by the predetermined current amount;
the circuit interruption element changing from its normal state to its fault state, thereby causing the system to change from its normal operating condition to its fault condition, when the resistance of the control element has increased by the predetermined resistance amount.

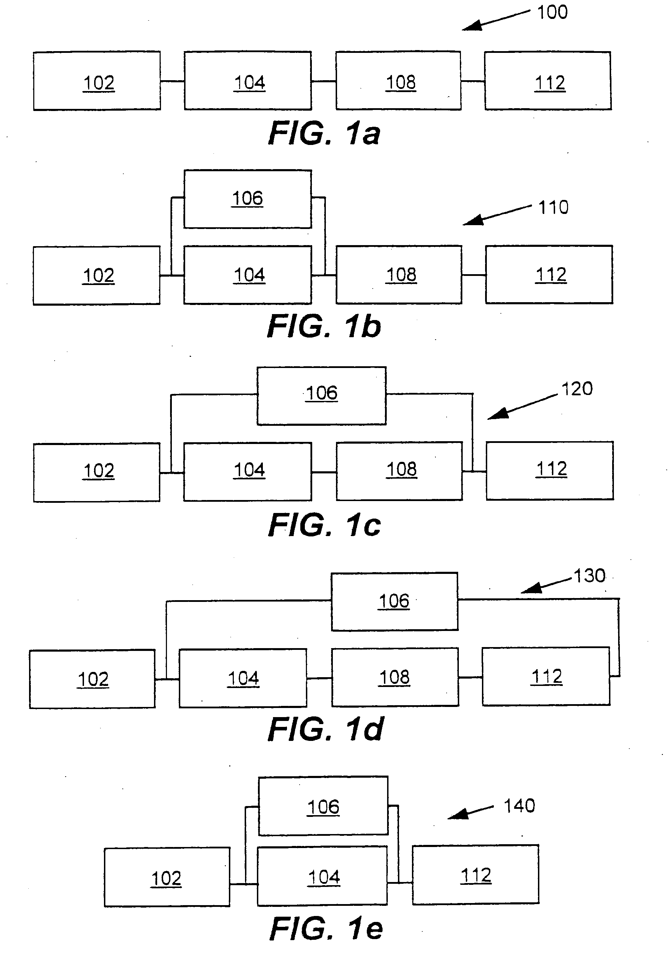

Overcurrent protection circuits arranged in accordance with the principles of this invention generally perform the four functions of sensing the current, interrupting the circuit, limiting the energy transferred to the circuit, and isolating the circuit from the power source. The overcurrent protection circuits may be viewed as comprising certain operational elements which work cooperatively to perform the four overcurrent protection functions. FIGS. 1a through 1e are block diagrams showing several arrangements of such operational elements.

Five operational elements depicted in FIGs. 1a through 1e are the source 102, control element 104, bypass element 106, interrupt element 108 and load 112. The source 102 provides the electrical power to the circuit, and the load 112 performs the intended purpose of the circuit. The control 104, bypass 106 and interrupt 108 elements work cooperatively to provide the overcurrent protection. The control element 104 typically performs the two functions of sensing the current and limiting the energy transferred to the circuit in case of overcurrent. The interrupt element 108 typically performs the functions of interrupting the current in the circuit and providing circuit isolation. The bypass element 106 typically assists the control element 104 in limiting the energy passed to the circuit by diverting current, thereby permitting the interrupt element 108 to interrupt the current in the circuit.

As represented in FIG. 1a, some overcurrent protection circuits may include control 104 and interrupt 108 elements, but no bypass element 106. In such circuits, the control element 104 typically reduces the current in the circuit thereby enabling the interrupt element 108 to interrupt the current at a reduced level. As represented in FIG. 1e, some overcurrent protection circuits may include control 104 and bypass 106 elements, but no interrupt element 108. In such circuits, the control 104 and bypass 106 elements typically reduce the current in the circuit substantially, but do not provide a circuit isolation function.

FIG. 1a shows a functional block diagram representing the operational elements comprising the electrical components in an embodiment of a first aspect of overcurrent protection circuits in accordance with this invention. The overcurrent protected circuit, referred to by the general reference character 100, includes four operational elements, i.e., the source 102, control element 104, interrupt element 108 and load 112.

The control element senses the current and determines whether the current delivered to the load 112 is within a normal acceptable range. When the control element 104 determines that the current delivered to the load 112 is excessive, the control element 104 reduces the current in the circuit. By reducing the current in the circuit, the control element 104 communicates with the interrupt element 108 causing the interrupt element 108 to further reduce or stop the flow of current delivered to the load 112. The control element 104 limits the energy transferred to the circuit in an overcurrent condition by working rapidly to sense the overcurrent and reduce the overcurrent thereby permitting the interrupt element 108 to safely interrupt the current delivered to the load 112.

In circuit arrangements corresponding to the block diagram of FIG. 1a, the cooperative operation of the control 104 and interrupt 108 elements permits the selection of electrical components with lower voltage and current ratings than would be required in other configurations. With the control element 104 in series with the interrupt element 108, both elements must have a carry current at least as high as the normal circuit current. However, the control element 104 may have a voltage rating significantly below the normal voltage of the circuit, and the interrupt element 108 may have the capability to interrupt the maximum overcurrent at low voltage, or to interrupt the normal voltage at low current, but need not be able to interrupt the maximum overcurrent at normal voltage. When an overcurrent occurs, the control element 104 reduces the current to a point where the current is below the interrupt current of the interrupt element 108, and does so in a time which is short enough not to damage the control element 104. The interrupt element 108 has the capability to withstand a voltage above that of the open circuit voltage of the circuit, and opens to protect the control element 104 from excessive voltage.

In circuit arrangements corresponding to the block diagrams of FIGS. 1a through 1d, the positions of the control 104 and interrupt 108 elements may be interchanged, i.e., the interrupt element 108 may precede the control element 104 in the circuit. However, depending on the particular configuration, the bypass element 106 would still span the control element 104 (FIG. 1b), control 104 and interrupt 108 elements (FIG. 1c), or the control element 104, interrupt element 108 and load 112 (FIG. 1d).

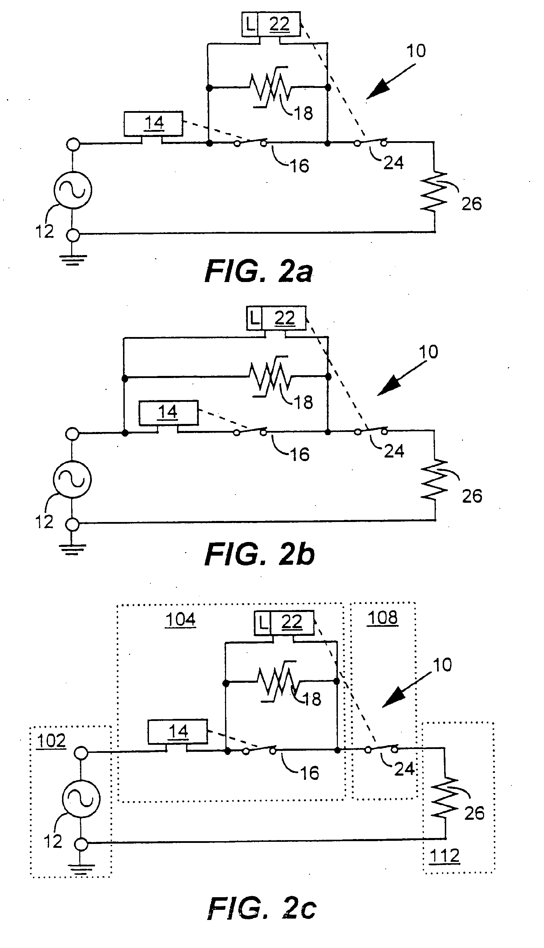

FIG. 2a shows an embodiment of a first aspect of an overcurrent protection circuit 10 employing a certain arrangement of a PTC device 18 with a current sensing relay 14 and a voltage sensing relay 22. The voltage sensing relay 22 is coupled to a first set of contacts 24, and the current sensing relay 14 is coupled to a second set of contacts 16. In this circuit, the current sensing relay 14 performs the function of sensing the current in the circuit 10. When the current sensing relay 14 detects an overcurrent condition, the current sensing relay 14 opens the second set of contacts 16 diverting the current to the PTC device 18. Normally the resistance of the PTC device 18 is smaller than the resistance of the voltage sensing relay 22, so most of the current flows through the PTC device 18. The PTC device 18 increases in resistance thereby limiting the current in the circuit 10, and applies a voltage across the voltage sensing relay 22. When the voltage across the voltage sensing relay 22 reaches the level necessary to energize the voltage sensing relay 22, the voltage sensing relay 22 opens the first set of contacts 24 interrupting the current in the circuit 10. The voltage sensing relay 22 is a latching relay, and after sensing and interrupting an overcurrent, would remain open until reset. The current sensing relay 14 must either be a latching relay, or must be matched with the voltage sensing relay 22 so that the current sensing relay 14 does not deenergize and close the second set of contacts 16 before the voltage sensing relay 22 completely energizes and opens the first set of contacts 24.

This arrangement has the feature that the PTC device 18 is not involved in the circuit until a fault is detected. There is therefore no requirement for the PTC device 18 to both carry current continuously and respond to a fault condition. This arrangement could therefore be used where the operating current of the circuit is greater than the hold current rating of the PTC device 18. For example, a 9.0 amp hold current PTC device 18 such as a Raychem RUE900 PolySwitch® device would normally take from 10 to 90 seconds to respond to a current of 18 amps. In the circuit arrangement of FIG. 2a, if the current sensing relay 14 were sized to respond to a current of 18 amps, a smaller PTC device 18 such as a Raychem RXE050 PolySwitch® device could be used, and would respond to an 18 amp surge in less than one second at room temperature.

The circuit shown in FIG. 2b is the circuit of FIG. 2a with the coil of the current sensing relay 14 repositioned. In this configuration, the current sensing relay 14 must be a latching relay since current would stop flowing when the second set of contacts 16 opens.

FIG. 2c shows the overcurrent protection circuit 10 of FIG. 2a with dotted lines surrounding the circuit components of the overcurrent protection circuit 10 to correspond with the four elements depicted in FIG. 1a, i.e. source 102, control element 104, interrupt element 108 and load 112.

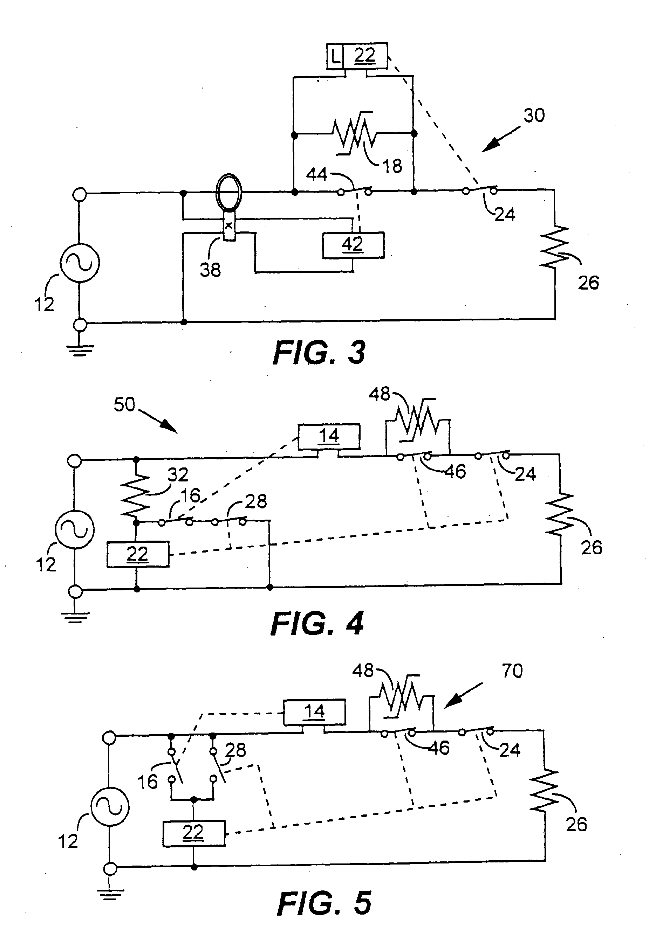

In some applications, for example cable television amplifier power supplies which operate at 1 Hz, AC current transformers used in current sensing relays would be too large to be cost effective. FIG. 3 shows an embodiment of a first aspect of an overcurrent protection circuit 30 similar to the circuit shown in FIG. 2a with the exception that a Hall effect device 38 is used to sense the current in the circuit. In this arrangement, the Hall effect device 38 monitors the current in the circuit 30, and upon sensing an overcurrent, energizes a relay 42 which opens a set of contacts 44, and diverts the current to the PTC device 18. The remainder of the operation of the circuit is as described for FIG. 2a. The Hall effect device 38 can be a linear current probe or a simple and inexpensive TTL sensor. The relay 42 and set of contacts 44 could be replaced by a transistor, a triac or other switching device.

The electrical components in the circuit shown FIG. 3 may be grouped in a manner similar to that shown in FIG. 2c with the Hall effect device 38 included in the block representing the control element 104.

The overcurrent protection circuits depicted in FIGS. 4 and 5 are two embodiments of another aspect of the invention in which the overcurrent detection is accomplished by current sensing relays. The circuits shown in both FIGS. 4 and 5 correspond with the functional block diagram depicted in FIG. 1d. The portion of the circuits in both FIGs. 4 and 5 that would comprise the interrupt element 108 shown in FIG. 1d include the combination of the first set of contacts 24 in series with the parallel combination of the PTC device 48 and a fourth set of contacts 46. This series-parallel combination is in-and-of-itself a circuit switch, as disclosed in U.S. Patent application serial number (docket number 1570-US1).

In the overcurrent protection circuit shown in FIG. 4, a current sensing relay 14 senses the current in the circuit 50. In an overcurrent situation, the current sensing relay 14 energizes, opening a second set of contacts 16, and diverting current through a voltage sensing relay 22. As the voltage sensing relay 22 energizes, it opens a first set of contacts 24, a third set of contacts 28 and a fourth set of contacts 46. The third set of contacts 28 in series with the second set of contacts 16 serves as a drop-out contact, ensuring that the voltage sensing relay 22 fully energizes. The combination of the first set of contacts 24 in series with the parallel combination of the fourth set of contacts 46 and the PTC device 48 safely removes the current from the load 26. As the fourth set of contacts 46 and the first set of contacts 24 start to open, the opening fourth set of contacts 46 diverts the current to the PTC device 48. The opening first set of contacts 24 may start to arc, however the PTC device 48 quickly triggers to a high impedance thereby reducing the current to a value that permits the first set of contacts to interrupt the current to the load 26.

One disadvantage of the circuit shown in FIG. 4 is that there is always some current trickling through a resistor 32, thereby dissipating power and generating heat during normal circuit operation. The overcurrent protection circuit 70 shown in FIG. 5 eliminates the need for the resistor 32. In the circuit of FIG. 5, if the current sensing relay 14 detects an overcurrent the current sensing relay 14 energizes and closes a normally open second set of contacts 16 diverting current through the voltage sensing relay 22. The voltage sensing relay 22 then energizes, closing a normally open third set of contacts 28 and opening the normally closed first set of contacts 24 and fourth set of contacts 46. Closing the third set of contacts 28 serves to keep the voltage sensing relay 22 energized, and opening the first set of contacts 24 and fourth set of contacts 46 removes current from the load 26 as described above for FIG. 4.

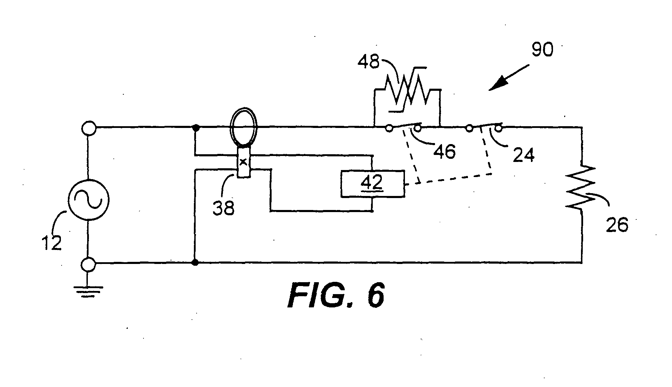

The overcurrent protection circuit 90 depicted in FIG. 6 is an embodiment of a third aspect of the invention employing the Hall effect device 38 to sense the overcurrent, and control the operation of relay 42 which opens both the first set of contacts 24 and the fourth set of contacts 46. In this embodiment, the opening of the first set of contacts 24 may be delayed until after the opening of the fourth set of contacts 46, depending on the time required for the PTC device 48 to switch to its high resistance state.

## Claims

1. An electrical system which can be connected between an electrical power supply and an electrical load to form an operating circuit, and which when so connected protects the circuit from overcurrents, which system having a normal operating condition and a fault condition, and comprising:
a. a circuit interruption element having,
(1) a normal state which permits the flow of a normal current, I_{NORMAL}, when the system is in the normal operating condition, and
(2) a fault state which permits the flow of at most a reduced current, substantially less than I_{NORMAL}, when the system is in the fault condition; and
b. a control element, connected in series with the circuit interruption element, the control element having a variable resistance which
(1) is low when the current in the system does not exceed the normal current, I_{NORMAL,} by a Predetermined current amount, and
(2) increases by at least a predetermined resistance amount when the current in the system exceeds the normal current, I_{NORMAL,} by the predetermined current amount;
the circuit interruption element changing from its normal state to its fault state, thereby causing the system to change from its normal operating condition to its fault condition, when the resistance of the control element has increased by the predetermined resistance amount

2. A system according to claim 1 wherein the control element comprises a series combination of:
a a current sensing means having
(1) a current deenergized state, when the current in the system does not exceed the normal current, I_{NORMAL}, by the predetermined current amount, and
(2) a current energized state, when the current in the system has exceeded the normal current, I_{NORMAL,} by the predetermined current amount; and
b. a parallel combination of
(1) a first circuit switch, coupled with the current sensing means, wherein the first circuit switch is
(a) closed when the current sensing means is in the current deenergized state, and
(b) open when the current sensing means is in the current energized state,
(2) a voltage sensing means having
(a) a voltage deenergized state when the voltage across the voltage sensing means does not exceed a predetermined voltage amount, and
(b) a voltage energized state when the voltage across the voltage sensing means exceeds the predetermined voltage amount, and
(3) a PTC devise, preferably a polymeric PTC device.

3. A system according to claim 2 wherein:
a. the current sensing means comprises a current sensing relay coil; and the first circuit switch comprises a first set of contacts coupled with the currant sensing relay coil; or
b. the currant sensing means comprises a current sensor having an output, and a relay coil coupled with the output of the current sensor, and the first circuit switch comprises a first set of contacts coupled with the relay coil.

4. A system according to claim 2 or 3 wherein:
a. the circuit interruption clement comprises a second circuit switch coupled with the voltage sensing means; and
b. the second circuit switch is
(1) closed when the voltage sensing means is in the voltage deenergized state, and
(2) open when the voltage sensing means is in the voltage energized state.

5. A system according to claim 1 wherein the control element comprises a series combination of:
a. a current sensing means, having
(1) a current deenergized state when the current in the circuit does not exceed the normal current, I_{NORMAL,} by the predetermined current amount, and
(2) a current energized state when the current in the circuit has exceeded the normal current, I_{NORMAL,} by the predetermined current amount; and
b. a parallel combination of
(1) a first circuit switch, coupled with the current sensing means, wits the first circuit switch
i. closed when the current sensing means is in the current deenergized state, and
ii. open when the current sensing means is in the current energized state, and
(2) a PTC device.

6. A system according to claim 5 wherein:
a. the current sensing means comprises
(1) a current sensor having an output, and
(2) a relay coil coupled with the output of the current sensor;
b. the first circuit switch comprises a first set of contacts coupled with the relay coil; and
c. the second circuit switch comprises a second set of contacts coupled with the relay coil.

7. An electrical circuit comprising:
a an electrical power supply;
b. an electrical load; and
c. an electrical protection system according to any one of the preceding claims.
